# EUROPÄISCHE PATENTSCHRIFT

(11) **EP 4 561 850 B1**
(45) Veröffentlichungstag und Bekanntmachung des Hinweises auf die Patenterteilung: **09.12.2026**
(21) Anmeldenummer: 23736603.4
(22) Anmeldetag: 20.06.2023
(51) Int. Cl.: B60C 15/06

(54) **NUTZFAHRZEUGREIFEN**
COMMERCIAL-VEHICLE TIRE
PNEU DE VÉHICULE UTILITAIRE

(30) Priorität: 29.07.2022 DE 102022207875
(43) Veröffentlichungstag der Anmeldung: 04.06.2025
(73) Patentinhaber: Continental Reifen Deutschland GmbH, 30175 Hannover (DE)
(72) Erfinder: REDROUTHU, Bharat Mohan, 30175 Hannover (DE); HENGESBACH, Frank, 30175 Hannover (DE); KLEFFMANN, Jens, 30175 Hannover (DE); FRIES, Volkmar, 30175 Hannover (DE); PANACEK, Anton, 020 01 Puchov (SK)
(74) Vertreter: Continental Corporation
(86) Internationale Anmeldenummer: PCT/DE2023/200119
(87) Internationale Veröffentlichungsnummer: WO 2024/022560

(56) Entgegenhaltungen:
- JP-A- 2002 178 724
- JP-A- 2007 038 741
- JP-A- H10 147 116
- JP-A- S61 268 503
- US-A1- 2012 318 427

## Beschreibung

Die Erfindung betrifft einen Nutzfahrzeugreifen mit Wulstbereichen mit jeweils einem Wulstkern, einem auf dem Wulstkern radial außen aufsitzenden, zweiteiligen Apex und einem Hornprofil, sowie ferner einer um die Wulstkerne umgeschlagenen, ein- oder mehrlagigen Karkasseinlage, wobei sich jeder Apex aus einem radial äußeren Apexteil und einem den Wulstkern kontaktierenden, radial inneren Apexteil zusammensetzt, wobei der radial äußere Apexteil und der radial innere Apexteil jeweils aus einem Gummimaterial bestehen und sich das Gummimaterial des radial äußeren Apexteils vom Gummimaterial des radial inneren Apexteils unterscheidet.

Ein Nutzfahrzeugreifen der eingangs genannten Art ist beispielsweise aus der DE 10 2014 211 525 A1 bekannt. Der Nutzfahrzeugreifen weist einen an der Außenseite der Karkasseinlage verlaufenden Stahlkordwulstverstärker, in jedem Wulstbereich einen zweiteiligen Apex sowie zwei an der Außenseite des Stahlkordwulstverstärkers verlaufende Verstärkungslagen aus in Gummi eingebetteten textilen Festigkeitsträgern auf. Der Apex weist einen radial äußeren Apexteil und einen radial inneren Apexteil auf, wobei sich bei einer Ausführung das Gummimaterial des radial äußeren Apexteils vom Gummimaterial des radial inneren Apexteils im Hinblick auf seine Härte unterscheidet. Die Verstärkungslagen enden radial innerhalb des Wulstkerns und reichen in radialer Richtung bis in eine Höhe, welche sich auf eine in axialer Richtung durch den Felgeneckpunkt verlaufende Linie bezieht und zumindest 70 mm beträgt, wobei die in dieser Höhe liegenden Enden der Verstärkungslagen in radialer Richtung einen Abstand von bis zu 10,0 mm voneinander aufweisen. Die Verstärkungslagen sorgen für eine höhere Steifigkeit in den oberen Wulst- und Seitenwandbereichen, wodurch der Rollwiderstand der Nutzfahrzeugreifens um 2% bis 5% reduziert ist.

Ein weiterer Nutzfahrzeugreifen der eingangs genannten Art, welcher ein Schrägschulterreifen ist, ist aus der DE 10 2014 213 240 A1 bekannt. Der Nutzfahrzeugreifen weist eine gegebenenfalls mit einem Füllprofil kombinierte Innenschicht, eine Karkasshochschläge bildende Karkasseinlage, in jedem Wulstbereich einen an der Außenseite der Karkasseinlage verlaufenden Stahlkordwulstverstärker mit einem reifenaußenseitig verlaufenden Abschnitt und einem reifeninnenseitig verlaufenden Abschnitt sowie einen Apex aus einem radial äußeren Apexteil und einem radial inneren Apexteil auf. Das Gummimaterial des radial äußeren Apexteils kann sich vom Gummimaterial des radial inneren Apexteils unterscheiden. Zwischen der Innenschicht bzw. dem Füllprofil und dem reifeninnenseitig verlaufenden Abschnitt des Stahlkordwulstverstärkers und dem an diesen in radialer Richtung anschließenden Abschnitt der Karkasseinlage verläuft eine Verstärkungslage aus in Gummi eingebetteten textilen Festigkeitsträgern, welche für eine besonders hohe Lastfähigkeit und eine hohe Laufleistung sorgt.

Aus der JP 2000 108 616 A ist ein Nutzfahrzeugreifen mit Wulstbereichen mit je einem mehrteiligen Apex aus zumindest zwei Apexteilen bekannt. Gemäß einem Ausführungsbeispiel setzt sich der Apex aus einem radial inneren Apexteil und einem radial äußeren Apexteil zusammen, wobei das Gummimaterial des radial inneren Apexteils eine größere Härte aufweist als das Gummimaterial des radial äußeren Apexteils. Dies soll für eine gute Wulsthaltbarkeit sorgen.

Weitere Nutzfahrzeugreifen mit Wulstbereichen mit zweiteiligem Apex sind aus der US 2012/318427 A1, der JP 2002 178724 A sowie der JP S61 268503 A bekannt. Ein weiterer Nutzfahrzeugreifen ist in der JP H10 147116 A offenbart.

Es ist ferner bekannt, dass die Ausgestaltung der Wulstbereiche eines Nutzfahrzeugreifens maßgeblich die Fahrstabilität, das Lenkverhalten, den Einfederungskomfort sowie den Sitz des Reifens auf der Felge beeinflusst. Dabei ist es insbesondere von Bedeutung, Steifigkeitssprünge in den Wulstbereichen zu vermeiden und einen möglichst gleichmäßigen (fließenden) Steifigkeitsverlauf sicherzustellen. Im Bereich der Wulstkerne ist die Steifigkeit am größten, wobei die Wulstkerne für einen sicheren und festen Sitz des Reifens auf der Felge verantwortlich sind. In den dünner ausgeführten Seitenwandbereichen ist die Steifigkeit geringer als in der Nähe der Wulstkerne, wodurch der Reifen beim Abrollen periodisch einfedern kann (Walkarbeit). Eine zu große Einfederung führt zu einer höheren Walkarbeit und damit zu einer thermischen Erwärmung, wodurch der Reifen Schäden erleiden kann. Über den Apex wird die Steifigkeit und der Steifigkeitsverlauf im Wulst- und Seitenwandbereich beeinflusst. Die Einfederung sollte dabei nicht zu nahe an den Felgenhörnern der Felge stattfinden, da dies die Gefahr erhöht, dass sich der Reifen an den Felgenhörner verformt und die Wulstbereiche des Reifens beschädigt werden. Treten an den Wulstbereichen Schäden auf, kommt eine Runderneuerung des Reifens im Bereich des Laufstreifens nicht mehr in Frage.

Aktuell ist es weiterhin üblich, einteilige Apexe aus einem einzigen Gummimaterial mit einer "mittleren" oder "geringen" Steifigkeit zu verwenden. Aufgrund ihrer dreieckförmigen Querschnittsform sorgen auch einteilige Apexe für einen entsprechenden Steifigkeitsverlauf im Wulst- und Seitenwandbereich, wobei die einteiligen Apexe den mehrteiligen Apexen in dieser Hinsicht deutlich unterlegen sein. Einteilige Apexe sind also im Hinblick auf die Wulsthaltbarkeit nicht optimal, haben sich jedoch bei entsprechender Auswahl des Gummimateriales im Hinblick auf den Rollwiderstand als günstig erwiesen.

Die bisher bekannten mehrteiligen Apexe aus zumindest zwei Apexteilen, bei welchen es üblich ist, dass der eine Apexteil aus einem Gummimaterial mit einer größeren Steifigkeit und der andere Apexteil aus einem Gummimaterial mit einer geringen Steifigkeit besteht, sind für die Wulsthaltbarkeit besonders vorteilhaft, sodass die Gefahr von Reifenschäden im Wulstbereich reduziert ist und der Nutzfahrzeugreifen folglich üblicherweise für eine Runderneuerung in Betracht gezogen wird.

Bei der Auslegung und Ausgestaltung von Apexen besteht somit ein bisher nur unzureichend gelöster Zielkonflikt zwischen dem Rollwiderstand und der unmittelbar mit der Runderneuerbarkeit in Zusammenhang stehenden Wulsthaltbarkeit.

Der Erfindung liegt daher die Aufgabe zugrunde, bei einem Nutzfahrzeugreifen der eingangs genannten Art, den zwischen dem Rollwiderstand und der Wulsthaltbarkeit bestehenden Zielkonflikt auf deutlich günstigere Weise als bisher zu lösen.

Gelöst wird die gestellte Aufgabe erfindungsgemäß dadurch,
∘ dass der radial innere Apexteil eine Querschnittsfläche mit einem Flächeninhalt von 60% bis 160% des Flächeninhalts der Querschnittsfläche des Wulstkerns aufweist,
∘ wobei das Gummimaterial des radial inneren Apexteils einen Spannungswert bei 100% Dehnung - ermittelt nach DIN 53504 mit dem Prüfkörpertyp S3 - aufweist, welcher um 2,00 MPa bis 30,00 MPa größer ist als der Spannungswert bei 100% Dehnung des Gummimateriales des radial äußeren Apexteils und
∘ wobei das Gummimaterial des radial äußeren Apexteils eine Rückprallelastizität bei 70°C - ermittelt nach ISO 4662, mit einem Prüfkörper mit einer Dicke von 6,3 mm ± 0,5 mm gemäß Annex A der ISO 4662 - aufweist, welche um 5,0 Prozentpunkte bis 50,0 Prozentpunkte größer ist als die Rückprallelastizität bei 70°C des Gummimateriales des radial inneren Apexteils.

Gemäß der Erfindung weist der radial innere Apexteil eine deutlich kleinere Querschnittsfläche auf als es bisher üblich ist, wobei die Querschnittsfläche des radial inneren Apexteils um zumindest ein Drittel, tendenziell sogar um zumindest 50%, kleiner ist als bei bisher üblichen Apexen. Obwohl der radial innere Apexteil "klein" ist, bleibt durch sein steifes Gummimaterial (größerer Spannungswert bei 100% Dehnung) insgesamt eine hohe Wulststabilität (gute Wulsthaltbarkeit) erhalten, sodass sich der Nutzfahrzeugreifen hervorragend zur Runderneuerung eignet. Insbesondere ist die Wulsthaltbarkeit - im Vergleich zu aktuell üblichen einteiligen Apexen - deutlich verbessert. Der folglich im Hinblick auf seine Querschnittsfläche größer als bisher üblich ausgeführte, radial äußere Apexteil besteht aus einem Gummimaterial, dessen Rückprallelastizität bei 70°C deutlich größer ist als jene des Gummimateriales des radial inneren Apexteils. Das Gummimaterial des radial äußeren Apexteils ist somit im Hinblick auf den Rollwiderstand des Reifens optimiert. Der Rollwiderstand ist dabei insbesondere im Vergleich zu bekannten Nutzfahrzeugreifen mit den bisher üblichen zweiteiligen Apexen deutlich verbessert (geringer Rollwiderstand). Der erfindungsgemäße Nutzfahrzeugreifen ist somit im Hinblick auf den zwischen dem Rollwiderstand und der Wulststabilität bestehenden Zielkonflikt deutlich verbessert.

Gemäß einer bevorzugten Ausführung beträgt der Flächeninhalt der Querschnittsfläche des radial inneren Apexteils 70% bis 140%, insbesondere 75% bis 130%, bevorzugt 80% bis 120%, besonders bevorzugt bis zu 100%, des Flächeninhalts der Querschnittsfläche des Wulstkerns. Dies ist im Hinblick auf den zu lösenden Zielkonflikt besonders günstig.

Gemäß einer weiteren bevorzugten Ausführung ist der Spannungswert bei 100% Dehnung des Gummimateriales des radial inneren Apexteils um 3,00 MPa bis 25,00 MPa, bevorzugt um 4,00 MPa bis 18,00 MPa, besonders bevorzugt um 4,50 MPa bis 16,00 MPa, am meisten bevorzugt um 6,00 MPa bis 12,00 MPa größer als der Spannungswert bei 100% Dehnung des Gummimateriales des radial äußeren Apexteils. Die angegebenen Differenzen haben sich insbesondere als besonders vorteilhaft für die Wulsthaltbarkeit des Reifens erwiesen.

Zusätzlich ist es für die Wulsthaltbarkeit günstig, wenn der Spannungswert bei 100% Dehnung des Gummimateriales des radial äußeren Apexteils 0,50 MPa bis 9,00 MPa, insbesondere 0,75 MPa bis 7,50 MPa, bevorzugt 1,00 MPa bis 6,00 MPa, und besonders bevorzugt 2,50 MPa bis 5,00 MPa beträgt.

Eine weitere bevorzugte Ausführung ist dadurch gekennzeichnet, dass die Rückprallelastizität bei 70°C des Gummimateriales des radial äußeren Apexteils um 7,5 Prozentpunkte bis 45,0 Prozentpunkte, vorzugsweise um 9,0 Prozentpunkte bis 40,0 Prozentpunkte, und besonders bevorzugt um 10,0 Prozentpunkte bis 30,0 Prozentpunkte, größer ist als die Rückprallelastizität bei 70°C des Gummimateriales des radial inneren Apexteils. Dies trägt zu einer weiteren Reduktion des Rollwiderstands des Reifens bei.

Ferner ist es für den Rollwiderstand des Reifens günstig, wenn die Rückprallelastizität bei 70°C des Gummimateriales des radial inneren Apexteils 25% bis 65%, insbesondere 30% bis 60%, und vorzugsweise zumindest 45% beträgt.

Gemäß einer weiteren bevorzugten Ausführung ist die Karkasseinlage einlagig ausgeführt und endet in jedem Wulstbereich als Karkasshochschlag mit einer in radialer Richtung ermittelten Höhe, wobei der radial innere Apexteil an seiner der Reifeninnenseite zugewandten, die Karkasseinlage kontaktierenden Seite eine in radialer Richtung ermittelte, maximale Höhe von 60% bis 100%, insbesondere von 70% bis 90%, der Höhe des Karkasshochschlags aufweist, wobei sich die maximale Höhe und die Höhe auf eine Linie beziehen, welche, im Reifenquerschnitt betrachtet, in axialer Richtung durch einen mit dem Felgeneckpunkt korrespondierenden Punkt am Wulstbereich des Nutzfahrzeugreifens verläuft. Auch diese Ausführung ist für den Rollwiderstand und die Wulsthaltbarkeit von zusätzlichem Vorteil.

Gemäß einer alternativen weiteren bevorzugten Ausführung ist die Karkasseinlage mehrlagig ausgeführt, wobei jede Lage der Karkasseinlage in jedem Wulstbereich als Karkasshochschlag mit einer in radialer Richtung ermittelten Höhe endet, wobei der radial innere Apexteil an seiner der Reifeninnenseite zugewandten, die Karkasseinlage kontaktierenden Seite eine in radialer Richtung ermittelte, maximale Höhe von 60% bis 100%, insbesondere 70% bis 90%, der Höhe des höchsten Karkasshochschlags aufweist, wobei sich die maximale Höhe und die Höhe auf eine Linie beziehen, welche, im Reifenquerschnitt betrachtet, in axialer Richtung durch einen mit dem Felgeneckpunkt korrespondierenden Punkt am Wulstbereich des Nutzfahrzeugreifens verläuft. Diese Ausführung ist ebenfalls für den Rollwiderstand und die Wulsthaltbarkeit von zusätzlichem Vorteil.

Bei den beiden letztgenannten bevorzugten Ausführungen beträgt die Höhe des Karkasshochschlags insbesondere 25,0 mm bis 50,0 mm, bevorzugt 30,0 mm bis 45,0 mm.

Bevorzugter Weise ist die Querschnittsfläche des radial inneren Apexteiles dreieckförmig, wobei der radial innere Apexteil an seinem dem Wulstkern abgewandten Ende ausläuft. Diese Ausführung ist im Hinblick auf den Zielkonflikt zwischen dem Rollwiderstand und der Wulsthaltbarkeit von weiterem Vorteil.

Ferner ist es bei den beiden letztgenannten Ausführungen vorteilhaft, wenn der radial äußere Apexteil, im Reifenquerschnitt betrachtet, zwischen dem bzw. jedem Karkasshochschlag und dem radial inneren Apexteil hineinverläuft.

Bevorzugter Weise ist der Nutzfahrzeugreifen zur Montage auf einer gemäß E.T.R.T.O. Standards genormten 15°-Tiefbettfelge mit Breitencode 5,25 bis 18,00 vorgesehen.

Es ist somit die Verwendung des erfindungsgemäßen Nutzfahrzeugreifens auf einer gemäß E.T.R.T.O. Standards genormten 15°-Tiefbettfelge mit Breitencode 5,25 bis 18,00 besonders vorteilhaft.

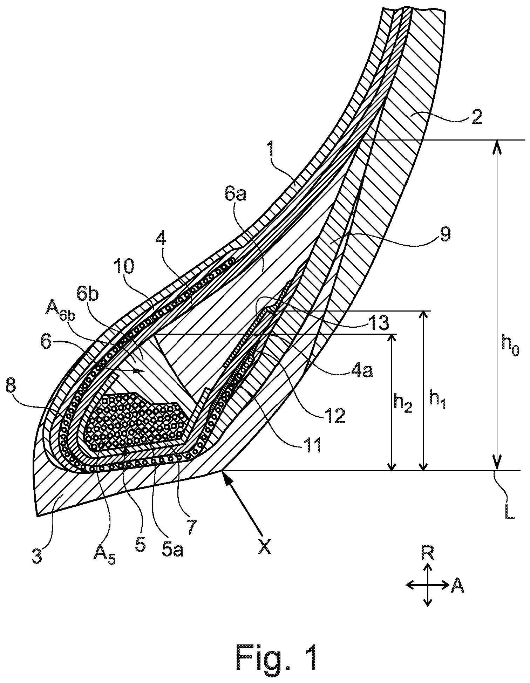

Weitere Merkmale, Vorteile und Einzelheiten der Erfindung werden nun anhand der einzigen Figur, Fig. 1, die schematisch einen Querschnitt durch einen der Wulstbereiche eines Nutzfahrzeugreifens mit einer Ausführungsform der Erfindung zeigt, erläutert.

Gemäß der Erfindung ausgeführte Nutzfahrzeugreifen sind Reifen für mehrspurige Nutzfahrzeuge, vorzugsweise für mittelschwere LKWs (7,5 t < zGM ≤ 18,0 t), für schwere LKWs (zGM > 18,0 t) oder für Busse, sowie insbesondere Nutzfahrzeugreifen in Radialbauart.

Die nachfolgend angegebenen Höhen sind in radialer Richtung (angedeutet durch den Doppelpfeil R) gemessen und beziehen sich jeweils auf eine Linie L, welche bei auf einer passenden Felge aufgezogenem, nicht aufgepumptem Nutzfahrzeugreifen, im Reifenquerschnitt betrachtet, in axialer Richtung (angedeutet durch den Doppelpfeil A) durch einen mit dem Felgeneckpunkt korrespondierenden Punkt X am jeweiligen Wulstbereich des Nutzfahrzeugreifens verläuft. Unter der axialen Richtung wird die parallel zur Rotationsachse des Nutzfahrzeugreifens verlaufende Richtung verstanden. Die radiale Richtung entspricht der im Reifenquerschnitt senkrecht zur axialen Richtung verlaufenden Richtung. Der Felgeneckpunkt ist bekannter Weise der Schnittpunkt der Felgenschulter mit dem Felgenhorn. Die Ermittlung der Höhen erfolgt mit einem auf einer Felge aufgebrachten, aus einem vulkanisierten Fahrzeugluftreifen herausgeschnittenen Reifenumfangsabschnitt. Alternativ kann die Ermittlung der Höhen mittels Computertomographie erfolgen.

Fig. 1 zeigt einen Querschnitt durch einen Wulstbereich eines vulkanisierten Nutzfahrzeugreifens. Der zweite, nicht gezeigte Wulstbereich ist übereinstimmend zum gezeigten Wulstbereich ausgeführt.

Der Nutzfahrzeugreifen ist insbesondere zur Montage auf einer 15°-Tiefbettfelge vorgesehen, welche gemäß dem European Tyre and Rim Technical Organisation Standards Manual ("E.T.R.T.O-Standards") in der aktuell geltenden Fassung (Stand 19.07.2022), Abschnitt 15° Drop-Center Rims (width codes 5,25 to 18,00) mit nominalen Durchmessern von 17,5 Zoll, 19,5 Zoll, 20,5 Zoll, 22,5 Zoll oder 24,5 Zoll ausgeführt ist.

In Fig. 1 sind von den Bauteilen des Nutzfahrzeugreifens ein Abschnitt einer luftdichten Innenschicht 1, ein Abschnitt einer Seitenwand 2, ein Hornprofil 3, ein Abschnitt einer einlagigen Karkasseinlage 4, ein Wulstkern 5, ein auf dem Wulstkern 5 sitzender, zweiteiliger Apex 6, eine Kernfahne 7, ein Stahlkordwulstverstärker 8, ein Füllprofil 9 und ein Füllprofil 10 gezeigt. Sämtliche dieser Bauteile verlaufen über den gesamten Reifenumfang, sind also in Umfangsrichtung ringförmig umlaufende Bauteile.

Die Seitenwand 2 überlappt reifenaußenseitig das Hornprofil 3. Die Karkasseinlage 4 besteht aus in Gummi einbetteten, kreuzungsfrei sowie im Wesentlichen parallel zueinander verlaufenden Stahlkorden, wobei die Karkasseinlage 4 in bekannter Weise zwischen den beiden Wulstkernen 5 verläuft, um jeden Wulstkern 5 von der der Innenschicht 1 zugewandten Reifeninnenseite kommend in Richtung Reifenaußenseite umgeschlagen ist und reifenaußenseitig neben dem Apex 6 als Karkasshochschlag 4a in einer Höhe h₁ von 25,0 mm bis 50,0 mm, bevorzugt von 30,0 mm bis 45,0 mm endet. Die Kernfahne 7 besteht aus einem gummierten Textilgewebe, insbesondere aus gummiertem Nylongewebe, und ist derart um den Wulstkern 5 gelegt, dass sie die Karkasseinlage 4 vom Wulstkern 5 trennt. Der Stahlkordwulstverstärker 8 besteht aus in Gummi eingebetteten, kreuzungsfrei sowie im Wesentlichen parallel zueinander verlaufenden Stahlkorden, verläuft in Kontakt mit der dem Wulstkern 5 abgewandten Seite der Karkasseinlage 4 und endet reifeninnenseitig und reifenaußenseitig jeweils im Bereich des Apexs 6, wobei er reifenaußenseitig vor dem Ende des Karkasshochschlags 4a endet. Das Füllprofil 9 befindet sich reifenaußenseitig des Wulstkerns 5 und des Apexs 6, verläuft - jeweils abschnittsweise - zwischen dem Stahlkordwulstverstärker 8 und dem Hornprofil 3, zwischen dem Karkasshochschlag 4a und dem Hornprofil 3 sowie zwischen dem Apex 6 und dem Hornprofil 3 bzw. der Seitenwand 2. Das Füllprofil 10 verläuft zwischen den beiden Wulstbereichen, befindet sich in jedem Wulstbereich reifeninnenseitig des Wulstkerns 5 und des Apexs 6 und verläuft in jedem Wulstbereich abschnittsweise zwischen dem Stahlkordwulstverstärker 8 und der Innenschicht 1 sowie abschnittsweise zwischen der Innenschicht 1 und der Karkasseinlage 4.

Der Wulstkern 5 besteht aus in Umfangsrichtung umlaufendem, in Gummimaterial eingebettetem, zugfestem Kerndraht 5a, welcher insbesondere aus Metall gefertigt ist und vorzugsweise einen kreisförmigen Querschnitt aufweist. Der Wulstkern 5a wird in bekannter Weise durch Aufwickeln eines einzigen in Gummimaterial eingebetteten Kerndrahtes 5a oder durch Aufwickeln einer Vielzahl von in Gummimaterial eingebetteten Kerndrähten 5a gebildet. Der Wulstkern 5 weist, im Reifenquerschnitt betrachtet, eine Querschnittsfläche mit einem Flächeninhalt As auf. Bei einem Wulstkern 5 aus einem einzigen Kerndraht 5a errechnet sich der Flächeninhalt As der Querschnittsfläche des Wulstkerns 5 aus der maximalen Anzahl der Windungen multipliziert mit dem Flächeninhalt der Querschnittsfläche des Kerndrahts 5a. Die Anzahl der Windungen kann - in Abhängigkeit der Stelle des Querschnittes - um eine Windung variieren. Die "maximale Anzahl der Windungen" ist die Anzahl der Windungen an einer Stelle, an welcher die größte Anzahl an Windungen vorzufinden ist. Bei einem Wulstkern 5 aus einer Vielzahl von Kerndrähten 5a errechnet sich der Flächeninhalt As der Querschnittsfläche des Wulstkerns 5 aus der Anzahl der Kerndrähte 5a multipliziert mit dem Flächeninhalt der Querschnittsfläche eines Kerndrahtes 5a. Bei der Ermittlung des Flächeninhalts As bleibt das den Kerndraht 5a bzw. die Kerndrähte 5a umgebende Gummimaterial daher unberücksichtigt.

Der zweigeteilte Apex 6 setzt sich aus einem den Wulstkern 5 vorzugsweise nicht kontaktierenden, aus einem Gummimaterial bestehenden, radial äußeren Apexteil 6a und einem den Wulstkern 5 kontaktierenden, ebenfalls aus einem Gummimaterial bestehenden, radial inneren Apexteil 6b zusammen. Die Gummimaterialen der Apexteile 6a, 6b unterscheiden sich im Hinblick auf ihre Spannungswerte bei 100% Dehnung sowie im Hinblick auf ihre Rückprallelastizitäten bei 70°C, wie nachfolgend noch erläutert wird.

Der radial innere Apexteil 6b weist beim gezeigten Ausführungsbeispiel, im Reifenquerschnitt betrachtet, eine im Wesentlichen dreieckige Querschnittsfläche auf, läuft an seinem dem Wulstkern 5 abgewandten Ende entlang eines reifeninnenseitig verlaufenden Abschnittes der Karkasseinlage 4 aus und reicht bis in eine maximale Höhe h₂ (Höhe an der höchsten Stelle), welche 60% bis 100%, insbesondere 70% bis 90%, der bereits erwähnten Höhe h₁ des Karkasshochschlags 4a beträgt. Die Querschnittsfläche des radial inneren Apexteils 6b weist einen Flächeninhalt A_{6b} auf, welcher 60% bis 160%, insbesondere 70% bis 140%, bevorzugt 75% bis 130%, besonders bevorzugt 80% bis 120%, am meisten bevorzugt bis zu 100%, des Flächeninhalts As der Querschnittsfläche des Wulstkerns 5 beträgt.

Der radial äußere Apexteil 6a verläuft, im Reifenquerschnitt betrachtet, zwischen den Karkasshochschlag 4a und dem radial inneren Apexteil 6b hinein, trennt derart gemeinsam mit der Kernfahne 7 den radial inneren Apexteil 6b vom Karkasshochschlag 4a und reicht in radialer Richtung bis in eine Höhe h₀, welche größer ist als die bereits erwähnte Höhe h₁ des Karkasshochschlags 4a.

Die bereits erwähnten Spannungswerte bei 100% Dehnung wurden gemäß DIN 53504 (Prüfung von Kautschuk und Elastomeren - Bestimmung von Reißfestigkeit, Zugfestigkeit, Reißdehnung und Spannungswerten im Zugversuch (Ausgabe 2017-03), Prüfkörpertyp S3) ermittelt.

Die Rückprallelastizität bei 70°C wurde gemäß ISO 4662 (Elastomere oder thermoplastische Elastomere - Bestimmung der Rückprallelastizität von Vulkanisaten (Ausgabe 2017-06, Pendulum method gemäß Abschnitt 5)) ermittelt, wobei die Dicke des Prüfkörpers 6,3 mm ± 0,5 mm betrug, wie in Annex A (Use of non-standard test pieces) erwähnt.

Die Rückprallelastizität bei 70°C dient als Indikator für den Rollwiderstand des Reifens, wobei eine hohe Rückprallelastizität bei 70°C einen geringen Rollwiderstand bedeutet.

Das Gummimaterial des radial äußeren Apexteils 6a weist einen Spannungswert bei 100% Dehnung auf, welcher 0,50 MPa bis 9,00 MPa, insbesondere 0,75 MPa bis 7,50 MPa, bevorzugt 1,00 MPa bis 6,00 MPa, und besonders bevorzugt 2,50 MPa bis 5,00 MPa beträgt. Das Gummimaterial des radial inneren Apexteils 6b weist einen Spannungswert bei 100% Dehnung auf, welcher um 2,00 MPa bis 30,00 MPa, insbesondere um 3,00 MPa bis 25,00 MPa, bevorzugt um 4,00 MPa bis 18,00 MPa, besonders bevorzugt um 4,50 MPa bis 16,00 MPa, am meisten bevorzugt um 6,00 MPa bis 12,00 MPa größer ist als der Spannungswert bei 100% Dehnung des Gummimateriales des radial äußeren Apexteils 6a.

Das Gummimaterial des radial äußeren Apexteils 6a weist ferner eine Rückprallelastizität bei 70°C auf, welche um 5,0 Prozentpunkte bis 50,0 Prozentpunkte, insbesondere um 7,5 Prozentpunkte bis 45,0 Prozentpunkte, vorzugsweise um 9,0 Prozentpunkte bis 40,0 Prozentpunkte, und besonders bevorzugt um 10,0 Prozentpunkte bis 30,0 Prozentpunkte, größer ist als die Rückprallelastizität bei 70°C des Gummimateriales des radial inneren Apexteils 6b. Das Gummimaterial des radial inneren Apexteils 6b weist eine Rückprallelastizität bei 70°C auf, welche 25% bis 65%, insbesondere 30% bis 60%, und vorzugsweise zumindest 45% beträgt.

Beim gezeigten Ausführungsbeispiel sind reifenaußenseitig des Apexs 6 drei aus Gummi bestehende, in Umfangsrichtung umlaufende Verstärkungsstreifen 11, 12, 13 verbaut. Der Verstärkungsstreifen 11 verläuft zwischen dem Karkasshochschlag 4a und dem Stahlkordwulstverstärker 8. Der Verstärkungsstreifen 12 verläuft über seine gesamte Erstreckung in Kontakt mit dem Füllprofil 9 sowie jeweils abschnittsweise in Kontakt mit dem Stahlkordwulstverstärker 8, dem Karkasshochschlag 4a und dem radial äußeren Apexteil 6a. Der Verstärkungsstreifen 13 deckt das freie Ende des Karkasshochschlags 4a ab und verläuft jeweils abschnittsweise in Kontakt mit dem radial äußeren Apexteil 6a und dem Verstärkungsstreifen 12.

Tabelle 1 zeigt Beispiele für Kautschukmischungen A und B. Die Mengenangaben der Bestandteile der Kautschukmischungen A und B erfolgen in der Kautschuktechnologie üblichen Einheit phr (parts per hundred parts rubber). Die Mengenangaben beziehen sich dabei jeweils auf 100 Massenteile des Grundpolymers. Aus den Kautschukmischungen A und B wurden Reifen mit entsprechend aufgebauten Apexen, wie in Tabelle 2 angegeben, hergestellt und verglichen, wie im Anschluss an Tabelle 1 erläutert.

**Tabelle 1: Rezepte**

| | Kautschukmischung A (KM A) | Kautschukmischung B (KM B) |
|---|---|---|
| Naturkautschuk | 100 | 100 |
| Ruß N 339 | 90 | 25 |
| Silica BET 160 (Kieselsäure) | 0 | 15 |
| Öl (Weichmacher) | 6 | 3 |
| Phenolharz | 5 | 0 |
| Alterungsschutzmittel | 5 | 5 |
| Zinkoxid (Aktivator) | 3 | 3 |
| Stearinsäure (Aktivator) | 2 | 2 |
| Beschleuniger | 3 | 1,5 |
| Schwefel | 2,5 | 2,5 |

Es wurden für eine Lenkachse vorgesehene Nutzfahrzeugreifen der Dimension 315/70 R 22,5 gefertigt, welche sich ausschließlich im Hinblick auf die Ausgestaltung des Apexs unterscheiden. Die Apexe wiesen dabei eine übereinstimmende Querschnittsform und somit übereinstimmend große Querschnittsflächen auf. Die Unterschiede der Apexe sind aus Tabelle 2 ersichtlich. Tabelle 2 enthält ferner Ergebnisse von Reifentestes, wobei ein Rollwiderstandstest gemäß ISO 28580 (Pkw-, Lkw- und Busreifen-Rollwiderstandsmessverfahren - Einpunktprüfung und Korrelation der Messergebnisse, Ausgabe 2018-07) und ein eigens entwickelter Wulsthaltbarkeitstest (Trommeltest) durchgeführt wurden. Das Testergebnis für die Wulsthaltbarkeit des Referenzreifen Ref. 1 wurde dabei auf einen Wert von 100 festgelegt. Werte kleiner 100 deuten eine Verschlechterung der Wulsthaltbarkeit an.

**Tabelle 2: Reifentestergebnisse**

| | **Referenzreifen Ref. 1** | **Referenzreifen Ref. 2** | **Reifen gemäß der Erfindung** |
|---|---|---|---|
| **Aufbau des Apex** | zweiteilig | einteilig | zweiteilig |
| einteiliger Apex | - | KM B | - |
| radial äußerer Apexteil | KM B | - | KM B |
| radial innerer Apexteil | KM A | - | KM A |
| **Flächeninhalt Querschnittsfläche radial innerer Apexteil [% Flächeninhalt Querschnittsfläche Wulstkern]** | 240 | - | 104 |
| **Ergebnis Rollwiderstandstest** | 3,99 kg/t | 3,90 kg/t | 3,90 kg/t |
| **Ergebnis Wulsthaltbarkeitstest** | 100% | 95% | 100% |

Aus Tabelle 2 ist ersichtlich, dass der Nutzfahrzeugreifen gemäß der Erfindung gegenüber dem Referenzreifen Ref. 1 einen deutlich geringeren Rollwiderstand aufweist und betreffend der Wulsthaltbarkeit unverändert gut ist. Ferner ist aus Tabelle 2 ersichtlich, dass der Nutzfahrzeugreifen gemäß der Erfindung verglichen mit dem Referenzreifen Ref. 2 betreffend des Rollwiderstandes unverändert gut und im Hinblick auf die Wulsthaltbarkeit deutlich verbessert ist.

Ferner wurden übereinstimmende Testes mit einem für eine Antriebsachse vorgesehenen Reifen der genannten Dimension und einem für eine Trailerachse vorgesehenen Reifen der genannten Dimension durchgeführt. Auch dieser Test zeigen entsprechende Verbesserungen erfindungsgemäßer Reifen im Hinblick auf den Rollwiderstand und die Wulsthaltbarkeit.

Die Erfindung ist auf das beschriebene Ausführungsbeispiel nicht beschränkt.

Im Wulstbereich des Reifens können weitere Festigkeitsträger enthaltende Verstärkungslagen sowie weitere aus Gummi bestehende Verstärkungsstreifen verbaut sein. Die Karkasseinlage 4 kann mehrlagig, insbesondere zwei- oder dreilagig, ausgeführt sein. Bei einer mehrlagigen Karkasseinlage können die Karkasshochschläge der Lagen der Karkasseinlage in voneinander abweichenden Höhen enden. Der radial innere Apexteil 6b kann, im Reifenquerschnitt betrachtet, eine von der dreieckige Querschnittsfläche abweichende Querschnittsfläche aufweisen. Die bereits erwähnte maximale Höhe h₂ des radial inneren Apexteils 6b beträgt 60% bis 100%, insbesondere 70% bis 90%, der Höhe des höchsten Karkasshochschlags. Die Kernfahne 7, der Stahlkordwulstverstärker 8 sowie die Verstärkungsstreifen 11, 12, 13 sind optional. Die Querschnittsfläche des Wulstkerns ist insbesondere sechseckig oder kreisförmig. Alternativ weist die Querschnittsfläche des Wulstkerns eine von der Form eines Hexagons bzw. eines Kreises abgeleitete Form auf. Eine solche abgeleitete Form ist beispielsweise eine Querschnittsfläche in Form eines Hexagons mit einem etwa parallelogrammförmig ausgesparten Eckbereich.

### Bezugszeichenliste

- 1: Innenschicht
- 2: Seitenwand
- 3: Hornprofil
- 4: Karkasseinlage
- 4a: Karkasshochschlag
- 5: Wulstkern
- 5a: Kerndraht
- 6: Apex
- 6a: radial äußerer Apexteil
- 6b: radial innerer Apexteil
- 7: Kernfahne
- 8: Stahlkordwulstverstärker
- 9: Füllprofil
- 10: Füllprofil
- 11: Verstärkungslage
- 12: Verstärkungslage
- 13: Verstärkungslage
- A: Doppelpfeil (axiale Richtung)
- A₅, A_{6b}: Flächeninhalt
- h₀, h₁: Höhe
- h₂: maximale Höhe
- L: Linie
- R: Doppelpfeil (radiale Richtung)
- X: Punkt

## Patentansprüche

1. Nutzfahrzeugreifen mit Wulstbereichen mit jeweils einem Wulstkern (5), einem auf dem Wulstkern (5) radial außen aufsitzenden, zweiteiligen Apex (6) und einem Hornprofil (3), sowie ferner einer um die Wulstkerne (5) umgeschlagenen, ein- oder mehrlagigen Karkasseinlage (4), wobei sich jeder Apex (6) aus einem radial äußeren Apexteil (6a) und einem den Wulstkern (5) kontaktierenden, radial inneren Apexteil (6b) zusammensetzt, wobei der radial äußere Apexteil (6a) und der radial innere Apexteil (6b) jeweils aus einem Gummimaterial bestehen und sich das Gummimaterial des radial äußeren Apexteils (6a) vom Gummimaterial des radial inneren Apexteils (6b) unterscheidet,
wobei der radial innere Apexteil (6b) eine Querschnittsfläche mit einem Flächeninhalt (A_{6b}) von 60% bis 160% des Flächeninhalts (As) der Querschnittsfläche des Wulstkerns (5) aufweist,
**dadurch gekennzeichnet,**
∘ dass das Gummimaterial des radial inneren Apexteils (6b) einen Spannungswert bei 100% Dehnung - ermittelt nach DIN 53504 mit dem Prüfkörpertyp S3 - aufweist, welcher um 2,00 MPa bis 30,00 MPa größer ist als der Spannungswert bei 100% Dehnung des Gummimateriales des radial äußeren Apexteils (6a) und
∘ wobei das Gummimaterial des radial äußeren Apexteils (6a) eine Rückprallelastizität bei 70°C - ermittelt nach ISO 4662, mit einem Prüfkörper mit einer Dicke von 6,3 mm ± 0,5 mm gemäß Annex A der ISO 4662 - aufweist, welche um 5,0 Prozentpunkte bis 50,0 Prozentpunkte größer ist als die Rückprallelastizität bei 70°C des Gummimateriales des radial inneren Apexteils (6b).

2. Nutzfahrzeugreifen nach Anspruch 1, **dadurch gekennzeichnet, dass** der Flächeninhalt (A_{6b}) der Querschnittsfläche des radial inneren Apexteils (6b) 70% bis 140%, insbesondere 75% bis 130%, bevorzugt 80% bis 120%, besonders bevorzugt bis zu 100%, des Flächeninhalts der Querschnittsfläche (As) des Wulstkerns (5) beträgt.

3. Nutzfahrzeugreifen nach Anspruch 1 oder 2, **dadurch gekennzeichnet, dass** der Spannungswert bei 100% Dehnung des Gummimateriales des radial inneren Apexteils (6b) um 3,00 MPa bis 25,00 MPa, bevorzugt um 4,00 MPa bis 18,00 MPa, besonders bevorzugt um 4,50 MPa bis 16,00 MPa, am meisten bevorzugt um 6,00 MPa bis 12,00 MPa größer ist als der Spannungswert bei 100% Dehnung des Gummimateriales des radial äußeren Apexteils (6a).

4. Nutzfahrzeugreifen nach einem der Ansprüche 1 bis 3, **dadurch gekennzeichnet, dass** der Spannungswert bei 100% Dehnung des Gummimateriales des radial äußeren Apexteils (6a) 0,50 MPa bis 9,00 MPa, insbesondere 0,75 MPa bis 7,50 MPa, bevorzugt 1,00 MPa bis 6,00 MPa, und besonders bevorzugt 2,50 MPa bis 5,00 MPa beträgt.

5. Nutzfahrzeugreifen nach einem der Ansprüche 1 bis 4, **dadurch gekennzeichnet, dass** die Rückprallelastizität bei 70°C des Gummimateriales des radial äußeren Apexteils (6a) um 7,5 Prozentpunkte bis 45,0 Prozentpunkte, vorzugsweise um 9,0 Prozentpunkte bis 40,0 Prozentpunkte, und besonders bevorzugt um 10,0 Prozentpunkte bis 30,0 Prozentpunkte, größer ist als die Rückprallelastizität bei 70°C des Gummimateriales des radial inneren Apexteils (6b).

6. Nutzfahrzeugreifen nach einem der Ansprüche 1 bis 5, **dadurch gekennzeichnet, dass** die Rückprallelastizität bei 70°C des Gummimateriales des radial inneren Apexteils (6b) 25% bis 65%, insbesondere 30% bis 60%, und vorzugsweise zumindest 45% beträgt.

7. Nutzfahrzeugreifen nach einem der Ansprüche 1 bis 6, **dadurch gekennzeichnet, dass** die Karkasseinlage (4) einlagig ausgeführt ist und in jedem Wulstbereich als Karkasshochschlag (4a) mit einer in radialer Richtung (Doppelpfeil R) ermittelten Höhe (h₁) endet, wobei der radial innere Apexteil (6b) an seiner der Reifeninnenseite zugewandten, die Karkasseinlage (4) kontaktierenden Seite eine in radialer Richtung (Doppelpfeil R) ermittelte, maximale Höhe (h₂) von 60% bis 100%, insbesondere von 70% bis 90%, der Höhe (h₁) des Karkasshochschlags (4a) aufweist, wobei sich die maximale Höhe (h₂) und die Höhe (h₁) auf eine Linie (L) beziehen, welche, im Reifenquerschnitt betrachtet, in axialer Richtung (Doppelpfeil A) durch einen mit dem Felgeneckpunkt korrespondierenden Punkt (X) am Wulstbereich des Nutzfahrzeugreifens verläuft.

8. Nutzfahrzeugreifen nach einem der Ansprüche 1 bis 6, **dadurch gekennzeichnet, dass** die Karkasseinlage (4) mehrlagig ausgeführt ist, wobei jede Lage der Karkasseinlage (4) in jedem Wulstbereich als Karkasshochschlag (4a) mit einer in radialer Richtung (Doppelpfeil R) ermittelten Höhe (h₁) endet, wobei der radial innere Apexteil (6b) an seiner der Reifeninnenseite zugewandten, die Karkasseinlage (4) kontaktierenden Seite eine in radialer Richtung (Doppelpfeil R) ermittelte, maximale Höhe (h₂) von 60% bis 100%, insbesondere 70% bis 90%, der Höhe (h₁) des höchsten Karkasshochschlags (4a) aufweist, wobei sich die maximale Höhe (h₂) und die Höhe (h₁) auf eine Linie (L) beziehen, welche, im Reifenquerschnitt betrachtet, in axialer Richtung (Doppelpfeil A) durch einen mit dem Felgeneckpunkt korrespondierenden Punkt (X) am Wulstbereich des Nutzfahrzeugreifens verläuft.

9. Nutzfahrzeugreifen nach Anspruch 7 oder 8, **dadurch gekennzeichnet, dass** die Höhe (h₁) des Karkasshochschlags (4a) 25,0 mm bis 50,0 mm, bevorzugt 30,0 mm bis 45,0 mm, beträgt.

10. Nutzfahrzeugreifen nach einem der Ansprüche 1 bis 9, **dadurch gekennzeichnet, dass** die Querschnittsfläche des radial inneren Apexteiles (6b) dreieckförmig ist, wobei der radial innere Apexteil (6b) an seinem dem Wulstkern (5) abgewandten Ende ausläuft.

11. Nutzfahrzeugreifen nach einem der Ansprüche 7 bis 10, **dadurch gekennzeichnet, dass** der radial äußere Apexteil (6a), im Reifenquerschnitt betrachtet, zwischen dem bzw. jedem Karkasshochschlag (4a) und dem radial inneren Apexteil (6b) hineinverläuft.

12. Nutzfahrzeugreifen nach einem der Ansprüche 1 bis 11, **dadurch gekennzeichnet, dass** er zur Montage auf einer gemäß E.T.R.T.O. Standards genormten 15°-Tiefbettfelge mit Breitencode 5,25 bis 18,00 vorgesehen ist.

13. Verwendung des Nutzfahrzeugreifen nach einem der Ansprüche 1 bis 12 auf einer gemäß E.T.R.T.O. Standards genormten 15°-Tiefbettfelge mit Breitencode 5,25 bis 18,00.

## Claims

1. Commercial vehicle tyre comprising bead regions each having a bead core (5), a two-part apex (6) sitting radially outward on the bead core (5), and a flange profile (3), and further comprising a single-layer or multi-layer carcass inlay (4) wrapped around the bead cores (5), each apex (6) being composed of a radially outer apex portion (6a) and a radially inner apex portion (6b) which is in contact with the bead core (5), the radially outer apex portion (6a) and the radially inner apex portion (6b) each consisting of a rubber material, and the rubber material of the radially outer apex portion (6a) being different from the rubber material of the radially inner apex portion (6b),
the radially inner apex portion (6b) having a cross-sectional area having a surface area (A_{6b}) of 60% to 160% of the surface area (A₅) of the cross-sectional area of the bead core (5),
characterized
∘ in that the rubber material of the radially inner apex portion (6b) has a stress at 100% elongation - determined in accordance with DIN 53504 with the test piece type S3 - which is 2.00 MPa to 30.00 MPa greater than the stress at 100% elongation of the rubber material of the radially outer apex portion (6a) and
∘ the rubber material of the radially outer apex portion (6a) having a rebound resilience at 70°C - determined in accordance with ISO 4662, with a test piece having a thickness of 6.3 mm ± 0.5 mm according to Annex A of ISO 4662 - which is greater than the rebound resilience at 70°C of the rubber material of the radially inner apex portion (6b) by 5.0 to 50.0 percentage points.

2. Commercial vehicle tyre according to Claim 1, **characterized in that** the surface area (A_{6b}) of the cross-sectional area of the radially inner apex portion (6b) is 70% to 140%, in particular 75% to 130%, preferably 80% to 120%, particularly preferably up to 100%, of the surface area of the cross-sectional area (A₅) of the bead core (5).

3. Commercial vehicle tyre according to either Claim 1 or Claim 2, **characterized in that** the stress at 100% elongation of the rubber material of the radially inner apex portion (6b) is greater than the stress at 100% elongation of the rubber material of the radially outer apex portion (6a) by 3.00 MPa to 25.00 MPa, preferably by 4.00 MPa to 18.00 MPa, particularly preferably by 4.50 MPa to 16.00 MPa, most preferably by 6.00 MPa to 12.00 MPa.

4. Commercial vehicle tyre according to any of Claims 1 to 3, **characterized in that** the stress at 100% elongation of the rubber material of the radially outer apex portion (6a) is 0.50 MPa to 9.00 MPa, in particular 0.75 MPa to 7.50 MPa, preferably 1.00 MPa to 6.00 MPa, and particularly preferably 2.50 MPa to 5.00 MPa.

5. Commercial vehicle tyre according to any of Claims 1 to 4, **characterized in that** the rebound resilience at 70°C of the rubber material of the radially outer apex portion (6a) is greater than the rebound resilience at 70°C of the rubber material of the radially inner apex portion (6b) by 7.5 to 45.0 percentage points, preferably by 9.0 to 40.0 percentage points, and particularly preferably by 10.0 to 30.0 percentage points.

6. Commercial vehicle tyre according to any of Claims 1 to 5, **characterized in that** the rebound resilience at 70°C of the rubber material of the radially inner apex portion (6b) is 25% to 65%, in particular 30% to 60%, and preferably at least 45%.

7. Commercial vehicle tyre according to any of Claims 1 to 6, **characterized in that** the carcass inlay (4) has a single-layer design, and ends in each bead region as a carcass turn-up (4a) having a height (h₁) determined in the radial direction (double arrow R), the radially inner apex portion (6b) having a maximum height (h₂) determined in the radial direction (double arrow R) on the side thereof facing the tyre inner side, which is in contact with the carcass inlay (4), of 60% to 100%, in particular of 70% to 90%, of the height (h₁) of the carcass turn-up (4a), the maximum height (h₂) and the height (h₁) relating to a line (L) which, when viewed in the tyre cross section, extends in the axial direction (double arrow A) through a point (X) in the bead region of the commercial vehicle tyre which corresponds to the rim transition point.

8. Commercial vehicle tyre according to any of Claims 1 to 6, **characterized in that** the carcass inlay (4) has a multi-layer design, each layer of the carcass inlay (4) ending in each bead region as a carcass turn-up (4a) having a height (h₁) determined in the radial direction (double arrow R), the radially inner apex portion (6b) having a maximum height (h₂) determined in the radial direction (double arrow R) on the side thereof facing the tyre inner side, which is in contact with the carcass inlay (4), of 60% to 100%, in particular 70% to 90%, of the height (h₁) of the highest carcass turn-up (4a), the maximum height (h₂) and the height (h₁) relating to a line (L) which, when viewed in the tyre cross section, extends in the axial direction (double arrow A) through a point (X) in the bead region of the commercial vehicle tyre which corresponds to the rim transition point.

9. Commercial vehicle tyre according to either Claim 7 or Claim 8, **characterized in that** the height (h₁) of the carcass turn-up (4a) is 25.0 mm to 50.0 mm, preferably 30.0 mm to 45.0 mm.

10. Commercial vehicle tyre according to any of Claims 1 to 9, **characterized in that** the cross-sectional area of the radially inner apex portion (6b) is triangular, the radially inner apex portion (6b) tapering off on the end thereof facing away from the bead core (5).

11. Commercial vehicle tyre according to any of Claims 7 to 10, **characterized in that** the radially outer apex portion (6a), when viewed in the tyre cross section, extends in between the or each carcass turn-up (4a) and the radially inner apex portion (6b).

12. Commercial vehicle tyre according to any of Claims 1 to 11, **characterized in that** it is provided to be mounted on a 15°-drop-centre rim standardized in accordance with E.T.R.T.O. standards with a width code of 5.25 to 18.00.

13. Use of the commercial vehicle tyre according to any of Claims 1 to 12 on a 15°-drop-centre rim standardized in accordance with E.T.R.T.O. standards with a width code of 5.25 to 18.00.

## Revendications

1. Pneumatique pour véhicule utilitaire comprenant des zones de talon comportant chacune une tringle (5), un apex en deux parties (6) reposant radialement vers l'extérieur sur la tringle (5) et un profilé de protection de jante (3), ainsi qu'un insert de carcasse (4) mono- ou multicouche replié autour des tringles (5), chaque apex (6) étant composé d'une partie d'apex radialement extérieure (6a) et d'une partie d'apex radialement intérieure (6b) en contact avec la tringle (5), la partie d'apex radialement extérieure (6a) et la partie d'apex radialement intérieure (6b) étant chacune constituées d'un matériau en caoutchouc, et le matériau en caoutchouc de la partie d'apex radialement extérieure (6a) étant différent du matériau en caoutchouc de la partie d'apex radialement intérieure (6b),
la partie d'apex radialement intérieure (6b) présentant une surface de section d'une aire (A_{6b}) représentant de 60 % à 160 % de l'aire (A₅) de la surface de section de la tringle (5),
caractérisé en ce
∘ le matériau en caoutchouc de la partie d'apex radialement intérieure (6b) présente une contrainte à 100 % d'allongement - déterminée selon la norme DIN 53504 à l'aide d'une éprouvette de type S3 - supérieure de 2,00 MPa à 30,00 MPa à la contrainte à 100 % d'allongement du matériau en caoutchouc de la partie d'apex radialement extérieure (6a), et
∘ le matériau en caoutchouc de la partie d'apex radialement extérieure (6a) présentant une résilience au rebond à 70 °C - déterminée selon la norme ISO 4662, à l'aide d'une éprouvette d'une épaisseur de 6,3 mm ± 0,5 mm conformément à l'annexe A de la norme ISO 4662 - supérieure de 5,0 points de pourcentage à 50,0 points de pourcentage à la résilience au rebond à 70 °C du matériau en caoutchouc de la partie d'apex radialement intérieure (6b).

2. Pneumatique pour véhicule utilitaire selon la revendication 1, **caractérisé en ce que** l'aire (A_{6b}) de la surface de section de la partie d'apex radialement intérieure (6b) représente de 70 % à 140 %, en particulier de 75 % à 130 %, de préférence de 80 % à 120 %, de manière particulièrement préférée jusqu'à 100 %, de l'aire de la surface de section (A₅) de la tringle (5).

3. Pneumatique pour véhicule utilitaire selon la revendication 1 ou 2, **caractérisé en ce que** la contrainte à 100 % d'allongement du matériau en caoutchouc de la partie d'apex radialement intérieure (6b) est supérieure de 3,00 MPa à 25,00 MPa, de préférence de 4,00 MPa à 18,00 MPa, de manière particulièrement préférée de 4,50 MPa à 16,00 MPa, et de la manière la plus préférée de 6,00 MPa à 12,00 MPa à la contrainte à 100 % d'allongement du matériau en caoutchouc de la partie d'apex radialement extérieure (6a).

4. Pneumatique pour véhicule utilitaire selon l'une des revendications 1 à 3, **caractérisé en ce que** la contrainte à 100 % d'allongement du matériau en caoutchouc de la partie d'apex radialement extérieure (6a) est de 0,50 MPa à 9,00 MPa, en particulier de 0,75 MPa à 7,50 MPa, de préférence de 1,00 MPa à 6,00 MPa, et de manière particulièrement préférée de 2,50 MPa à 5,00 MPa.

5. Pneumatique pour véhicule utilitaire selon l'une des revendications 1 à 4, **caractérisé en ce que** la résilience au rebond à 70 °C du matériau en caoutchouc de la partie d'apex radialement extérieure (6a) est supérieure de 7,5 points de pourcentage à 45,0 points de pourcentage, de préférence de 9,0 points de pourcentage à 40,0 points de pourcentage, et de manière particulièrement préférée de 10,0 points de pourcentage à 30,0 points de pourcentage à la résilience au rebond à 70 °C du matériau en caoutchouc de la partie d'apex radialement intérieure (6b).

6. Pneumatique pour véhicule utilitaire selon l'une des revendications 1 à 5, **caractérisé en ce que** la résilience au rebond à 70 °C du matériau en caoutchouc de la partie d'apex radialement intérieure (6b) est de 25 % à 65 %, en particulier de 30 % à 60 %, et de préférence d'au moins 45 %.

7. Pneumatique pour véhicule utilitaire selon l'une des revendications 1 à 6, **caractérisé en ce que** l'insert de carcasse (4) est réalisé en une seule couche et se termine dans chaque zone de talon sous forme de retournement de carcasse (4a) présentant une hauteur (h₁) déterminée dans la direction radiale (double flèche R), la partie d'apex radialement intérieure (6b) présentant, sur son côté orienté vers le côté intérieur du pneumatique, en contact avec l'insert de carcasse (4), une hauteur maximale (h₂) déterminée dans la direction radiale (double flèche R) représentant de 60 % à 100 %, en particulier de 70 % à 90 %, de la hauteur (h₁) du retournement de carcasse (4a), la hauteur maximale (h₂) et la hauteur (h₁) se rapportant à une ligne (L) qui, considérée dans la section du pneumatique, passe dans la direction axiale (double flèche A) par un point (X) correspondant au point d'angle de la jante au niveau de la zone de talon du pneumatique pour véhicule utilitaire.

8. Pneumatique pour véhicule utilitaire selon l'une des revendications 1 à 6, **caractérisé en ce que** l'insert de carcasse (4) est réalisé en plusieurs couches, chaque couche de l'insert de carcasse (4) se terminant dans chaque zone de talon sous forme de retournement de carcasse (4a) présentant une hauteur (h₁) déterminée dans la direction radiale (double flèche R), la partie d'apex radialement intérieure (6b) présentant, sur son côté orienté vers le côté intérieur du pneumatique, en contact avec l'insert de carcasse (4), une hauteur maximale (h₂) déterminée dans la direction radiale (double flèche R) représentant de 60 % à 100 %, en particulier de 70 % à 90 %, de la hauteur (h₁) du retournement de carcasse (4a) le plus élevé, la hauteur maximale (h₂) et la hauteur (h₁) se rapportant à une ligne (L) qui, considérée dans la section du pneumatique, passe dans la direction axiale (double flèche A) par un point (X) correspondant au point d'angle de la jante au niveau de la zone de talon du pneumatique pour véhicule utilitaire.

9. Pneumatique pour véhicule utilitaire selon la revendication 7 ou 8, **caractérisé en ce que** la hauteur (h₁) du retournement de carcasse (4a) est de 25,0 mm à 50,0 mm, de préférence de 30,0 mm à 45,0 mm.

10. Pneumatique pour véhicule utilitaire selon l'une des revendications 1 à 9, **caractérisé en ce que** la surface de section de la partie d'apex radialement intérieure (6b) est de forme triangulaire, la partie d'apex radialement intérieure (6b) s'amincissant à son extrémité opposée à la tringle (5).

11. Pneumatique pour véhicule utilitaire selon l'une des revendications 7 à 10, **caractérisé en ce que** la partie d'apex radialement extérieure (6a), considérée dans la section du pneumatique, s'étend entre le ou chaque retournement de carcasse (4a) et la partie d'apex radialement intérieure (6b).

12. Pneumatique pour véhicule utilitaire selon l'une des revendications 1 à 11, **caractérisé en ce qu'**il est prévu pour être monté sur une jante à base creuse à 15° normalisée selon les normes E.T.R.T.O., présentant un code de largeur de 5,25 à 18,00.

13. Utilisation du pneumatique pour véhicule utilitaire selon l'une des revendications 1 à 12 sur une jante à base creuse à 15° normalisée selon les normes E.T.R.T.O., présentant un code de largeur compris entre 5,25 et 18,00.
